# EUROPÄISCHE PATENTSCHRIFT

(11) **EP 2 974 878 B1**
(45) Veröffentlichungstag und Bekanntmachung des Hinweises auf die Patenterteilung: **07.08.2019**
(21) Anmeldenummer: 15001724.2
(22) Anmeldetag: 10.06.2015
(51) Int. Cl.: B42D 15/00, B32B 27/00, B42D 1/00, B32B 5/04, B32B 5/26

(54) **MEHRSCHICHTIGER LAMINIERTER DATENSEITENKERN UND DESSEN HERSTELLUNGSVERFAHREN**
MULTILAYERED LAMINATED DATA SIDE CORE AND ITS MANUFACTURING METHOD
PARTIE CENTRALE DE PAGES DE DONNEES ET SON PROCEDE DE FABRICATION

(30) Priorität: 15.07.2014 DE 102014010462
(43) Veröffentlichungstag der Anmeldung: 20.01.2016
(73) Patentinhaber: Giesecke+Devrient Mobile Security GmbH, 81677 München (DE)
(72) Erfinder: Riedl, Josef, 85395 Attenkirchen (DE)

(56) Entgegenhaltungen:
- EP-A1- 1 502 765
- EP-B1- 0 976 854
- WO-A1-2006/079224
- WO-A1-2013/058374
- DE-A1-102004 055 495
- DE-A1-102006 037 383
- DE-A1-102012 213 913
- US-B1- 6 482 495

## Beschreibung

Die Erfindung betrifft einen Datenseitenkern, bei dem die flexible Innenschicht hervorsteht und eine Befestigungslasche bildet. Weiter betrifft die Erfindung ein Verfahren zur Herstellung eines Datenseitenkerns mit einer flexiblen Innenschicht, die an einer Seite vorsteht und eine Befestigungslasche bildet.

Aus der EP 1502765 B2 ist eine mehrschichtige Datenseite bekannt, bei der zwischen zwei Kunststoffschichten eine Gewebeschicht eingebracht ist, die an einer Randseite vorsteht und eine flexible Lasche bildet. Die Textilschicht wird durch Laminieren mit den Kunststoffschichten verbunden. Die Befestigung erfolgt dabei, indem Kunststoffmaterial durch die Maschenöffnungen der Textilschicht hindurchdringt und sich verbindet. Die Textilschicht und der Laminiervorgang müssen so aufeinander abgestimmt werden, dass durch die Maschenöffnungen zuverlässig eine dauerhafte Verbindung stattfindet. Das Herbeiführen einer festen Verbindung ist umso schwieriger, je kleiner die Maschenöffnungen gewählt werden.

Aus der EP 976 854 B1 sind desweiteren Kunststoff-Bikomponentenfäden vom Kernmanteltyp bekannt. Bei derartigen Fäden ist ein Kern aus einem ersten Kunststoffmaterial mit einem Mantel aus einem zweiten Kunststoffmaterial umgeben. Der Kern bestimmt maßgeblich die physikalischen Eigenschaften des Fadens, wie Festigkeit, Modul, Schrumpf, Schrumpfkraft oder Kriechverhalten unter Belastung und Temperatur. Der Mantel schützt den Kern gegen Abrieb und Verschmutzung und verbessert zudem das Gebrauchsverhalten. Kernmantelfäden wie die aus der EP 976 854 B1 bekannten werden z.B. für Siebgewebe in der Papierherstellung genutzt oder auch als Verstärkungseinlage in Autoreifen.

Aus der DE 102012112383 A1 ist eine Datenseite bekannt, die im Randbereich mit einem flexiblen Bandmaterial verbunden ist. Das Bandmaterial bedeckt in einem Überlappungsbereich die Datenseite und bildet auf der anderen Seite eine Lasche zur Befestigung in einem buchartigen Dokument. Die Verbindung des Bandmaterials mit der Datenseite im Überlappungsbereich erfolgt durch Schweißen oder Kleben.

Aus der DE 102012213913 A1 ist eine Datenseite bekannt, die mittels einer randseitig angebrachten Verbindunglasche mit einem buchartigen Sicherheitsdokument verbindbar ist. Die Verbindungslasche besteht aus einem textilen Material, das bevorzugt durch Ultraschallschweißen in einem Überlappungsbereich mit der Datenseite verbunden wird.

Aus der WO 2013/098131 A1 ist ein Faden zum Herstellen von Geweben bekannt, der aus einen Kern und einer Beschichtung besteht, wobei die Beschichtung wärmeaktivierbare Klebemittel zum stoffschlüssigen Verbinden mit sich selbst oder mit anderen Fäden des Gewebes aufweist. Der Faden eignet sich zum Beispiel zum Herstellen von Insektenschutzgittern.

Aus der US 6482495 B1 ist die Herstellung einer Chipkarte mit integrierter Antennenstruktur bekannt, die eine besonders glatte Oberfläche aufweist. Um dies zu erreichen, soll ein thermokompressibles Material verwendet werden. Das Material ist vorzugsweise ein Vlies, das aus hochschmelzenden Kernfasern besteht, z.B. PET, und eine niedrigschmelzende Beschichtung aufweist. Zur Herstellung einer Chipkarte werden zwei Schichten aus dem genannten Material übereinander angeordnet und dazwischen die einzusetzenden Bauelemente plaziert. Neben Vliesmaterialien sollen auch Gewebe möglich sein, die dabei auch aus Kernmantelfäden bestehen können.

Es ist Aufgabe der Erfindung ein Verfahren zur Herstellung eines mehrschichtigen Datenseitenkerns und einen mehrschichtigen Datenseitenkern anzugeben, der eine flexible Innenschicht aufweist, die zuverlässig dauerhaft fest mit den übrigen Kunststoffschichten des Datenseitenkerns verbunden ist und eine vorspringende flexible Lasche bildet.

Diese Aufgabe wird gelöst durch einen Datenseitenkern mit den Merkmalen des Anspruchs 1. Durch die erfindungsgemäße Verwendung eines Gewebes aus Bikomponentenfäden vom Kernmanteltyp lassen sich Gewebeschichten herstellen, die besonders gute Verbindungseigenschaften haben und zugleich eine besonders hohe mechanische Festigkeit aufweisen. Die Gewebeschichten müssen nicht durch besondere Schritte vorbereitet werden, weder ist etwa eine Beschichtung erforderlich noch das Anlegen von zusätzlichen Verbindungsöffnungen. Die Gewebeschicht springt an einer Seite gegenüber den übrigen Schichten eines Datenseitenkerns vor und bildet eine flexible Lasche, die sich beispielsweise als Befestigungslasche zur Einbindung einer Datenseite in ein Passbuch eignet.

Ein besonderer Vorteil eines erfindungsgemäß hergestellten Datenseitenkerns besteht darin, dass die Gewebeschicht in dem Teil, in dem sie innerhalb des Datenseitenkerns liegt, dessen mechanische Stabilität verstärkt. Das ist insbesondere dann von Vorteil, wenn ein Datenseitenkern nach dem Einbringen der Gewebeschicht noch anspruchsvollen weiteren Bearbeitungsschritten ausgesetzt ist, etwa dem Aufdrucken von elektrischen Leiterbahnen oder Antennenstrukturen.

Desweiteren ist die Abstimmung einer Gewebeschicht auf die weiteren Kunststoffschichten eines Datenseitenkerns und auf das jeweilige Laminierverfahren deutlich erleichtert, weil beispielsweise keine Rücksicht auf die Größe der Maschenöffnungen genommen werden muss und die Einstellung eines angepaßten Maschenöffnungsgrades entfällt.

In einer vorteilhaften Verwendung eines erfindungsgemäß hergestellten Datenseitenkerns dient dieser als Inlay zur Aufnahme von elektronischen Bauteilen, z.B. von Antennenspulen oder Chips.

Unter Bezugnahme auf die Zeichnung werden nachfolgend Ausführungsbeispiele der Erfindung näher erläutert.

Es zeigen:
- Fig. 1: im Querschnitt schematisch den Aufbau eines mehrschichtigen Datenseitenkerns mit flexibler Innenschicht vor und nach dem Laminieren,
- Fig. 2: schematisch im Querschnitt den Aufbau eines Datenseitenkerns mit einer vorspringender flexiblen Innenschicht vor und nach dem Laminieren.

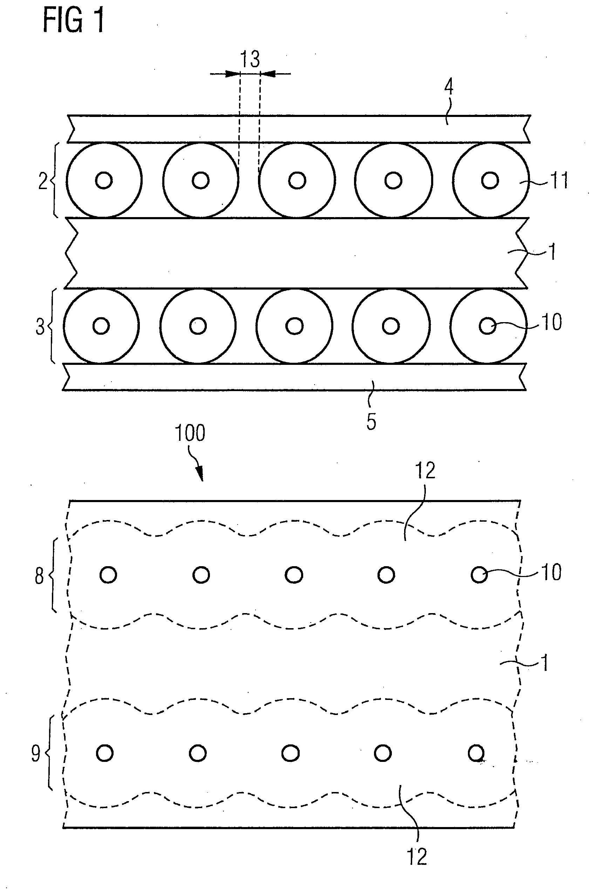

Fig. 1 zeigt im Querschnitt schematisch und nicht maßstabsgerecht eine Mehrzahl von übereinander angeordneten Schichten, die nachfolgend zusammenlaminiert werden. Eine Zentralschicht 1 ist dabei zwischen zwei Gewebeschichten 2, 3 plaziert, über denen jeweils nach außen hin eine Deckschicht 4, 5 angeordnet ist. Aus den Schichten 1 bis 5 wird durch Laminieren ein Datenseitenkern 100 gebildet.

Die Kernschicht 1 und die Deckschichten 4, 5 bestehen aus Kunststoff, zum Beispiel aus einem Kunststoff oder einer Mischung von Kunststoffen aus der Gruppe: PC (Polycarbonat), PET (Polyethylenterephtalat), TPE (thermoplastische Elastomere), TPU (thermoplastisches Polyurethan), PETG (glykolmodifiziertes Polyethylenterephtalat), ABS (Acrylnitril-Butadien-Styrol), PVC (Polyvinylchlorid), PE (Polyethylen), PP (Polypropylen), PMMA (Polymehtymethacrylat).

Basis der Gewebeschichten 2, 3 ist ein Bikomponentenfaden 7 vom Kernmanteltyp. Um einen Kern 10 aus einem ersten Kunststoffmaterial herum ist dabei ein Mantel 11 aus einem zweiten Kunststoffmaterial ausgebildet. Das Kunststoffmaterial des Kerns 10 ist ein hartes, festes und temperaturstabiles Material, das bei üblichen Laminiertemperaturen von 100°C bis 200°C nicht schmilzt. Geeignet ist zum Beispiel ein Material oder eine Mischung von Materialien aus der Gruppe der technischen Kunststoffe wie: PET (Polyethylenterephtalat), PA (Polyamid), Glas, Aramid, PEEK (Polyetheretherketon), PES (Polyethersulfon), PP (Polypropylen), Fluorpolymere, Carbon.

Das Kunststoffmaterial des Mantels 11 ist im Vergleich zu dem Material des Kerns 10 weicher, elastischer und besitzt einen niedrigeren Erweichungspunkt. Der Mantel 11 bildet beim Laminieren unter üblichen Laminiertemperaturen von 100°C bis 200°C eine klebrig aufschmelzende Hülle. Für den Mantel 11 in Betracht kommt zum Beispiel ein Material oder eine Mischung von Materialien aus der Gruppe: TPE (thermoplastische Elastomere), TPU (thermoplastisches Polyurethan), PETG (glykolmodifiziertes Polyethylenterephtalat), ABS Acrylnitril-Butadien-Styrol), PVC (Polyvinylchlorid), PE (Polyethylen), PP (Polypropylen), PMMA (Polymehtymethacrylat), PC (Polycarbonat).

Der Bikomponentenfaden 7 hat typischerweise einen Durchmesser von 50 bis 700 µm; der Kern 10 hat dabei typischerweise einen Durchmesser von 30 bis 500 µm. Mittels des Bikomponentenfadens 7 ist in üblicher Weise das Gewebe der Gewebeschichten 2, 3 hergestellt, zum Beispiel in Leinwandbindung, in Atlasbindung oder in Köperbindung. Die Gewebeschichten 2, 3 besitzen typische Maschenöffnungen 13.

Der Datenseitenkern 100 kann zum Beispiel den Kartenkörper einer Banckarte oder einer Ausweiskarte bilden. Er besitzt dann typischerweise Abmessungen, wie sie in der ISO-Norm festgelegt sind. Andere geometrische Gestaltungen mit anderen Abmessungen sind aber ebenso möglich. Weiterhin kann der Datenseitenkern 100 auch ein- oder beidseitig mit weiteren Schichten bedeckt sein. Auch kann ein Kartenkörper unter Verwendung mehrerer Datenseitenkerne 100 aufgebaut sein.

Der Laminiervorgang zum Verbinden der Schichten 1 bis 5 wird so geführt, dass in den Gewebeschichten 2, 3 die Mäntel 11 der Bikomponentenfäden 7 aufschmelzen und sich zu einer durchgehenden Hüllschicht 12 verbinden. Die Hüllschicht 12 füllt dadurch jeweils den gesamten Raum zwischen der Zentralschicht 1 und den Deckschichten 4, 5 aus. An ihrer Oberfläche verschmelzen bzw. verbinden sich die Hüllschichten 12 zudem jeweils mit den angrenzenden Kunststoffschichten 1, 4, 5. Die Kerne 10 sind temperaturstabil und behalten beim Laminieren ihre Form und ihre mechanische Stabilität. Im Inneren der Hüllschicht 12 befindet sich deshalb nach dem Laminieren ein aus den unveränderten Kernen 10 gebildetes, mechanisch stabiles Gewebeskelett. Hüllschicht 12 und das darin eingeschlossene Gewebeskelett bilden jeweils eine flexible Innenschicht 8, 9. Mithin verwandeln sich die Gewebeschichten 2, 3 in den Bereichen, wo sie laminiert werden, durch das Laminieren in flexible Innenschichten 8, 9.

Die flexiblen Innenschichten 8, 9 besitzen durch das Gewebeskelett eine hohe mechanische Festigkeit und verbinden sich zugleich gut mit den angrenzenden Schichten 1, 4, 5. Sie erhöhen damit die mechanische Stabilität des Datenseitenkerns 100 und bilden zugleich eine Laminierhilfe, welche die Kunststoffschichten 1, 4, 5 eines Datenseitenkerns wirksam miteinander verbindet. Die Wirkung als Laminierhilfe kann auch gezielt genutzt werden, um wirksame Verbindungen zwischen Kunststoffschichten 1, 4, 5 aus unterschiedlichen Kunststoffmaterialien zu schaffen, die ohne flexible Innenschichten 8, 9 nicht gebildet werden könnten. Die Kerne 10 können zudem genutzt werden, um ein Sicherheitsmerkmal zu erzeugen. Beispielsweise können Schuss-Fadenkerne und Ketten-Fadenkerne unterschiedliche Farben besitzen.

In einer Variante des in Figur 1 dargestellten Aufbaus folgt auf wenigstens eine der Gewebeschichten 2, 3 nicht unmittelbar eine Deckschicht 4, 5, sondern ist auf die wenigstens eine Gewebeschicht 2, 3 ein elektronisches Bauelement aufgebracht. Das elektronische Bauelement kann insbesondere ein Bauelement sein, dass unter hoher mechanischer Beanspruchung der tragenden Gewebeschicht 2, 3 aufgebracht wird, zum Beispiel eine gedruckte Leiterbahn oder eine gedruckte Antenne.

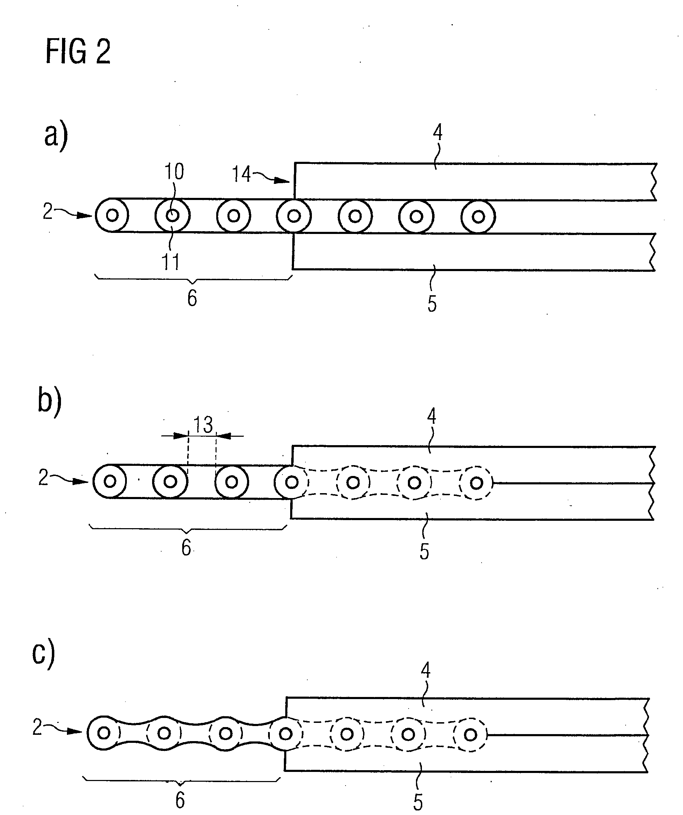

Fig. 2a zeigt eine Ausgangsanordnung zur Herstellung eines Datenseitenkerns, bei dem die Gewebeschicht 2 gegenüber den übrigen Schichten unter Ausbildung einer Stufe 14 vorsteht und eine Befestigungslasche 6 bildet. Ausgangspunkt für den Datenseitenkern 100 sind in diesem Fall prinzipiell drei Schichten, nämlich zwei Deckschichten 4, 5 sowie eine zwischen den Deckschichten 4, 5 angeordnete Gewebeschicht 2. Die Gewebeschicht 2 springt gegenüber den Deckschichten 4, 5 vor. Der vorspringende Bereich bildet eine Befestigungslasche 6. Der Vorsprung beträgt z.B. 2 bis 20 mm, wenn die Befestigungslasche 6 etwa dazu dienen soll, eine Datenseite in einem Paßbuch zu befestigen. Der innerhalb des Datenseitenkerns 100 liegende Teil der Gewebeschicht 2 kann vollflächig oder, wie in Fig. 2a angedeutet, teilweise zwischen den Deckschicht 4, 5 angeordnet sein.

Der Laminiervorgang kann ausgehend von der in Figur 2a dargestellten Anordnung auf zwei verschiedene Arten ausgeführt werden. In einer ersten, in Fig. 2b angedeuteten Ausführungsart wird der Laminiervorgang auf den Bereich der Deckschichten 4,5 beschränkt. In diesem Fall schmilzt beim Laminieren nur der Teil der Gewebeschicht 2 auf und bildet eine flexible Innenschicht 8, der zwischen den Deckschichten 4, 5 liegt. Der vorstehende, die Befestigungslasche 6 bildende Teil der Gewebeschicht 2 behält dagegen seine Gewebestruktur mit offenen Maschenöffnungen 13. Die so gebildete gewebeartige Befestigungslasche 6 lässt sich zum Beispiel gut durch Nähen an einem Träger befestigen.

In einer zweiten, in Fig. 2c angedeuteten Ausführungsart wird der Laminiervorgang sowohl über den Bereich der Deckschicht 4, 5 als auch über den vorstehenden Teil 6 der Gewebeschicht 2 erstreckt. Die hierzu eingesetzten Laminierplatten sind zweckmäßig gestuft ausgeführt, indem die zwischen dem vorstehenden Teil 6 und den Deckschichten 4, 5 ausgebildete Stufe 14 nachgeformt ist. Oder es werden im Bereich des vorstehenden Teils 6 der Gewebeschicht 2 Laminier-Einleger verwendet. In diesem Fall schmilzt die Gewebeschicht 2 über ihre gesamte Fläche auf und wird durchgehend zu einer flexiblen Innenschicht 8, die zu einem Teil zwischen den Deckschichten 4, 5 liegt und teilweise vorspringt. Der vorstehende, die Befestigungslasche 6 bildende Teil lässt sich dann zum Beispiel gut durch Kleben an einem Träger befestigen.

Unter Beibehaltung des grundlegenden Gedankens, zum Aufbau eines Daten Seitenkerns eine Gewebeschicht einzusetzen, die aus einem Bikomponentenfaden aufgebaut ist, deren Mäntel beim Laminieren verschmelzen, so dass aus der Gewebeschicht eine flexible Innenschicht wird, gestattet die Erfindung eine Reihe von weiteren Ausgestaltungen, die hier nicht im einzelnen beschrieben sind. Dies betrifft zum Beispiel den Aufbau der Gewebeschicht. Hier können beispielsweise unterschiedliche Fäden für Kette und Schuss verwendet werden. Auch können alle oder einzelne Fäden mit Sicherheitsmerkmalen versehen sein, beispielsweise lumineszierenden Farbpartikeln. Ein Datenseitenkern kann weiterhin ausgehend von mehr als einer oder zwei Gewebeschichten aufgebaut werden; die Gewebeschichten können sich dabei in ihren Materialien oder in der Gewebeart unterscheiden.

### Bezugszeichenliste

1 Zentralschicht
2 Gewebeschicht
3 Gewebeschicht
4 Deckschicht
5 Deckschicht
6 Befestigungslasche
7 Bikomponentenfaden
8 Flexible Innenschicht
9 Flexible Innenschicht
10 Fadenkern
11 Fadenmantel
12 Hüllschicht
13 Maschenöffnungen
14 Stufe
100 Datenseitenkern

## Patentansprüche

1. Mehrschichtiger laminierter Datenseitenkern mit
- einer ersten und einer zweiten Kunststoffschicht (1, 4, 5),
- und einer zwischen den Kunststoffschichten (1, 4, 5) angeordneten Gewebeschicht (2, 3), die an einer Seite gegenüber den Kunststoffschichten (1, 4, 5) vorspringt und eine flexible Lasche (6) bildet,
- **dadurch gekennzeichnet, dass** das Gewebe aus Bikomponentenfäden (7) vom Kernmanteltyp besteht, wobei das Material des Mantels der Bikomponentenfäden (7) eine niedrigere Erweichungstemperatur besitzt als das Material des Kerns (10).

2. Datenseitenkern nach Anspruch 1, **dadurch gekennzeichnet, dass** der Mantel (11) der Bikomponentenfäden (7) in dem Bereich, wo die Gewebeschicht (2, 3) und die Kunststoffschichten (1, 4, 5) sich überlagern, geschmolzen ist, so daß die Gewebeschicht (2, 3) in diesem Bereich zu einer flexiblen Innenschicht (8, 9) wird, die vollflächig mit den Kunststoffschichten (1, 4, 5) verbunden ist.

3. Datenseitenkern nach Anspruch 1, **dadurch gekennzeichnet, dass** die Gewebeschicht (2, 3) im vorspringenden Bereich (6) Maschenöffnungen (13) aufweist.

4. Verfahren zur Herstellung eines Datenseitenkerns mit den Schritten:
- Bereitstellen einer ersten und einer zweiten Kunststoffschicht (1, 4, 5),
- Bereitstellen einer Gewebeschicht (2, 3) mit Maschenöffnungen (13), wobei das Gewebe der Gewebeschicht (2, 3) aus Bikomponentenfäden (7) vom Kernmanteltyp besteht und das Material des Mantels (11) der Bikomponentenfäden (7) eine niedrigere Erweichungstemperatur besitzt als das Material des Kerns (10),
- Übereinanderpositionieren der Kunststoffschichten (1, 4, 5) und der Gewebeschicht (2, 3), wobei die Gewebeschicht (2, 3) zwischen den Kunststoffschichten (1, 4, 5) angeordnet wird, Verbinden der Kunststoffschichten (1, 4, 5) und der Gewebeschicht (2, 3) durch Laminieren,
**dadurch gekennzeichnet, dass** die Gewebeschicht (2, 3) so positionier wird, dass sie an einer Seite gegenüber den Kunststoffschichten (1, 4, 5) vorspringt und eine flexible Lasche (6) bildet, und die Temperatur beim Laminieren so eingestellt wird, dass die Mäntel (11) der Bikomponentenfäden (7) aufschmelzen und sich zu einer durchgehenden Hüllschicht (12) verbinden.

5. Verfahren nach Anspruch 4, **dadurch gekennzeichnet, dass** die Erweichungstemperatur des Mantels (7) kleiner oder gleich ist der beim Laminieren eingestellten Temperatur.

6. Verfahren nach Anspruch 5, **dadurch gekennzeichnet, dass** das Laminieren nur über den Bereich der Kunststoffschichten (1, 4, 5) ausgeführt wird.

7. Verfahren nach Anspruch 6, **dadurch gekennzeichnet, dass** das Laminieren auch über den Bereich der Kunststoffschichten (1, 4, 5) und über den vorspringenden Teil (6) der Gewebeschicht (2, 3) ausgeführt wird.

8. Verfahren nach Anspruch 4, **dadurch gekennzeichnet, dass** für den Kern (10) der Bikomponentenfäden ein Material oder eine Mischung von Materialien aus der Gruppe PET, PA, Glas, Aramid, PEEK, PES, PP, ein Fluorpolymer oder Carbon verwendet wird

9. Verfahren nach Anspruch 4, **dadurch gekennzeichnet, dass** für den Mantel (11) der Bikomponentenfäden (7) ein Material oder eine Mischung von Materialien aus der Gruppe TPE, TPU, PETG, ABS, PVC, PE, PP, PMMA oder PC verwendet wird.

10. Verfahren nach Anspruch 4, **dadurch gekennzeichnet, dass** für den Mantel (11) und die Kunststoffschichten (1, 4, 5) Materialien mit gleichen oder näherungsweise gleichen Schmelzpunkten verwendet werden.

## Claims

1. A multilayered laminated data page core having
- a first and a second plastic layer (1, 4, 5),
- and, arranged between the plastic layers (1, 4, 5), a fabric layer (2, 3) which projects over the plastic layers (1, 4, 5) on one side and forms a flexible tab (6),
- **characterized in that** the fabric consists of bicomponent fibers (7) of the core jacket type, wherein the material of the jacket of the bicomponent fibers (7) possesses a lower softening temperature than the material of the core (10).

2. The data page core according to claim 1, **characterized in that** the jacket (11) of the bicomponent fibers (7) has melted in the region where the fabric layer (2, 3) and the plastic layers (1, 4, 5) overlap, so that the fabric layer (2, 3) in this region becomes a flexible inner layer (8, 9) which is connected to the plastic layers (1, 4, 5) over the full area.

3. A data page core according to claim 1, **characterized in that** the fabric layer (2, 3) has mesh openings (13) in the projecting region (6).

4. A method for manufacturing a data page core with the steps:
- supplying a first and a second plastic layer (1, 4, 5),
- supplying a fabric layer (2, 3) having mesh openings (13), wherein the fabric of the fabric layer (2, 3) consists of bicomponent fibers (7) of the core jacket type and the material of the jacket (11) of the bicomponent fibers (7) possesses a lower softening temperature than the material of the core (10),
- positioning the plastic layers (1, 4, 5) and the fabric layer (2, 3) on top of each other, wherein the fabric layer (2, 3) is arranged between the plastic layers (1, 4, 5), connecting the plastic layers (1, 4, 5) and the fabric layer (2, 3) by laminating,
**characterized in that** the fabric layer (2, 3) is positioned such that it projects over one side of the plastic layers (1, 4, 5) and forms a flexible tab (6), and the temperature upon laminating is adjusted such that the jackets (11) of the bicomponent fibers (7) melt superficially and join together to form a continuous hull layer (12).

5. The method according to claim 4, **characterized in that** the softening temperature of the jacket (7) is less than or equal to the temperature set upon laminating.

6. The method according to claim 5, **characterized in that** the laminating is executed only over the region of the plastic layers (1, 4, 5).

7. The method according to claim 6, **characterized in that** the laminating is also executed over the region of the plastic layers (1, 4, 5) and over the projecting part (6) of the fabric layer (2, 3).

8. The method according to claim 4, **characterized in that** for the core (10) of the bicomponent fibers a material or a mixture of materials from the group PET, PA, glass, Aramid, PEEK, PES, PP, a fluoropolymer or carbon is employed.

9. The method according to claim 4, **characterized in that** for the jacket (11) of the bicomponent fibers (7) a material or a mixture of materials from the group TPE, TPU, PETG, ABS, PVC, PE, PP, PMMA or PC is employed.

10. The method according to claim 4, **characterized in that** for the jacket (11) and the plastic layers (1, 4, 5) materials with identical or approximately identical melting points are employed.

## Revendications

1. Partie interne pour page de données multicouche laminée ayant
- une première et une deuxième couche en matière plastique (1, 4, 5),
- et une couche de tissu (2, 3) agencée entre les couches en matière plastique (1, 4, 5), laquelle, d'un côté, est en saillie par rapport aux couches en matière plastique (1, 4, 5) et constitue une languette (6) flexible,
- **caractérisée en ce que** le tissu consiste en des fils à deux composants (7) du type gaine d'âme, cependant que le matériau de la gaine des fils à deux composants (7) possède une température de ramollissement inférieure à celle du matériau de l'âme (10).

2. Partie interne pour page de données selon la revendication 1, **caractérisée en ce que** la gaine (11) des fils à deux composants (7) est, dans la zone où la couche de tissu (2, 3) et les couches en matière plastique (1, 4, 5) se superposent, fondue, de telle sorte que la couche de tissu (2, 3) devient dans cette zone une couche intérieure (8, 9) flexible jointe sur toute sa surface aux couches en matière plastique (1, 4, 5).

3. Partie interne pour page de données selon la revendication 1, **caractérisée en ce que** la couche de tissu (2, 3) comporte dans la zone en saillie (6) un maillage (13).

4. Procédé de fabrication d'une partie interne pour page de données, comprenant les étapes :
- mise à disposition d'une première et d'une deuxième couche en matière plastique (1, 4, 5),
- mise à disposition d'une couche de tissu (2, 3) ayant un maillage (13), cependant que le tissu de la couche de tissu (2, 3) consiste en des fils à deux composants (7) du type gaine d'âme et que le matériau de la gaine (11) des fils à deux composants (7) possède une température de ramollissement inférieure à celle du matériau de l'âme (10).
- positionnement les unes sur les autres des couches en matière plastique (1, 4, 5) et de la couche de tissu (2, 3), cependant que la couche de tissu (2, 3) est agencée entre les couches en matière plastique (1, 4, 5), jonction des couches en matière plastique (1, 4, 5) et de la couche de tissu (2, 3) par laminage,
**caractérisé en ce que** la couche de tissu (2, 3) est positionnée de telle façon que, d'un côté, elle est en saillie par rapport aux couches en matière plastique (1, 4, 5) et constitue une languette (6) flexible, et que la température lors du laminage est réglée de telle façon que les gaines (11) des fils à deux composants (7) fondent et se joignent de manière à former une couche gainante (12) en continu.

5. Procédé selon la revendication 4, **caractérisé en ce que** la température de ramollissement de la gaine (7) est inférieure ou égale à la température réglée lors du laminage.

6. Procédé selon la revendication 5, **caractérisé en ce que** le laminage n'est exercé que sur la zone des couches en matière plastique (1, 4, 5).

7. Procédé selon la revendication 6, **caractérisé en ce que** le laminage est aussi exercé que sur la zone des couches en matière plastique (1, 4, 5) et sur la partie saillante (6) de la couche de tissu (2, 3).

8. Procédé selon la revendication 4, **caractérisé en ce que**, pour l'âme (10) des fils à deux composants, un matériau ou un mélange de matériaux du groupe PET, PA, verre, aramide, PEEK, PES, PP, un fluoropolymère ou carbone est utilisé.

9. Procédé selon la revendication 4, **caractérisé en ce que**, pour la gaine (11) des fils à deux composants (7), un matériau ou un mélange de matériaux du groupe TPE,TPU, PETG, ABS, PVC, PE, PP, PMMA ou PC est utilisé.

10. Procédé selon la revendication 4, **caractérisé en ce que**, pour la gaine (11) et les couches en matière plastique (1, 4, 5), des matériaux ayant des points de fusion égaux ou approximativement égaux sont utilisés.
